# EUROPEAN PATENT APPLICATION

(11) **EP 1 394 528 A2**
(43) Date of publication of application: **03.03.2004**
(21) Application number: 03254910.7
(22) Date of filing: 07.08.2003
(51) Int. Cl.: G01N 1/22, G01N 1/40

(54) **A gas borne substance sampling device**

(30) Priority: 13.08.2002 ZA 200206465; 05.12.2002 ZA 200209894
(71) Applicant: CSIR, Pretoria, Gauteng Provence (ZA)
(72) Inventor: Botha, Coanraad Frederick, Sinoville Pretoria 0182 (ZA); Smith, Pieter François, Lyttelton Centurion 0157 (ZA); Roach, Philip Keith, Centurion 0157 (ZA); Kappetijn, Dennis, Pretoria 0186 (ZA); Barnard, Marthinus Christoffel, Pretoria (ZA); Fuls, Paul Fritz, Pretoria 0081 (ZA)
(74) Representative: Fry, Alan Valentine

(57) **Abstract**

A gas borne substance sampling device includes a housing (512) through which gas can be passed, and a holder (514) for gas borne substance capturing material. The holder (514) is located or locatable inside the housing (512) to contact the capturing material with gas passing through the housing (512). The device has a sampling condition in which at least a major portion of the holder (514) is protected inside or covered by the housing (512) and an analysis condition in which at least a portion of the holder (514) is exposed or outside the housing (512).

## Description

The applicant is aware of a gas borne substance sampling device which comprises a winding core with filter material wound around the winding core, located in an open-ended tube or sleeve. Problems encountered with the prior art gas borne substance sampling device of which the applicant is aware, however include that air flow through the tube is impeded by the winding core which blocks more-or-less 75 % of the available cross-sectional flow area, that the device is not compatible with the use of gas chromatographs, and that it is very difficult, if not impossible, to keep the tube sterile during use.

According to a first aspect of the invention, there is provided a gas borne substance sampling device which includes
a housing through which gas can be passed; and
a holder for gas borne substance capturing material, the holder being located or locatable inside the housing to contact the capturing material with gas passing through the housing, the device having a sampling condition in which at least a major portion of the holder is protected inside or covered by the housing and an analysis condition in which at least a portion of the holder is exposed or outside the housing.

According to a second aspect of the invention, there is provided a gas borne substance sampling device which includes
a housing defining a gas flow passage; and
a holder for gas borne substance capturing material, the holder being located or locatable inside the housing to contact the capturing material with gas passing along the gas flow passage, the holder being configured to allow at least some of the gas to pass through the holder.

According to a third aspect of the invention, there is provided a gas borne substance sampling device which includes
a housing through which gas can be passed; and
a holder inside which gas borne substance capturing material can be held, the holder being located or locatable inside the housing to contact the capturing material with gas passing through the housing.

The holder may include a handle or gripping formation.

According to a fourth aspect of the invention, there is provided a gas borne substance sampling device, which includes
a housing through which gas can be passed; and
a holder for gas borne substance capturing material, the holder being located or locatable inside the housing to contact the capturing material with gas passing through the housing, the holder including a gripping formation which allows a manipulator to manipulate the holder without the manipulator physically contacting the capturing material.

In this specification, the term "gas" is intended to refer to both vapours and gases and the term "gas borne substance" includes vaporised substances, gases and gas borne particulate material. Furthermore, the term "gas borne substance capturing material" is intended to include mechanical filtering or separation media as well as absorbent and adsorbent separation media.

The applicant believes that the gas borne substance sampling device of the invention will be particularly, though not necessarily exclusively, suitable for use with dogs that have been trained to detect the presence of a particular substance or odour. The device of the invention may thus in particular be a canine-based scent sampling device.

The sampling device according to the second, third or fourth aspect of the invention may have a sampling condition in which at least a major portion of the holder is protected inside or covered by the housing and an analysis condition in which at least a portion of the holder is exposed or outside the housing.

The housing and the holder may be relatively displaceable to expose the holder when the device is in its analysis condition.

The housing may be in the form of a sleeve and the holder may be slidably received inside the sleeve. The sleeve may be cylindrical, e.g. circular cylindrical. One open end of the sleeve may define a gas inlet and an opposed open end may define a gas outlet.

The holder may include a cage portion to receive the capturing material. The cage portion may be elongate. At least one end of the cage portion may be fully or partially open, and walls of the cage portion may be gas permeable, e.g. apertured.

The handle may extend from an end of the cage remote from the end of the sleeve which in use is the gas inlet end.

The device may include a retaining arrangement to retain the holder in the housing in a position corresponding to the analysis condition of the device. Preferably, in the analysis condition, a major portion of or substantially the whole of the cage is exposed outside the housing.

The device may include a retaining arrangement to retain the holder in the housing in a position corresponding to the sampling condition of the device.

The device may include a retaining arrangement to retain the holder in a brushing position in which capturing material protrudes from the housing and the holder to define a brush formation.

The retaining arrangement may comprise a retaining formation or formations on the holder and a complementary or co-acting retaining formation or formations on the housing.

The invention extends to a gas borne substance sampling device connector, which includes a body defining a gas inlet and a gas outlet, the gas inlet being shaped and dimensioned to be connected in fluid flow manner to a gas borne substance sampling device, and the gas outlet being located in a tapering portion of the body.

The tapering portion may be conical or frusto-conical.

The gas inlet may be shaped and dimensioned to be connected in fluid flow manner to the housing of a gas borne substance sampling device as hereinbefore described. As will be appreciated, the connector can advantageously be used with any one of a number of commercially available vacuum cleaners and the sampling device of the invention, to suck air through the sampling device. Due to the tapering portion of the body, various sized suction hoses or the like can easily be used with the connector.

The housing may be elongate with a longitudinal axis. The holder may form part of a trap which comprises the gas borne substance capturing material, the trap thus being located or locatable inside the housing. The trap may be arranged so that gas passing through the housing passes through the capturing material in a direction which is at an angle to the longitudinal axis of the housing.

According to a fifth aspect of the invention, there is provided a gas borne substance sampling device which includes
an elongate housing having a longitudinal axis and through which gas can be passed; and
a trap comprising gas borne substance capturing material or being loadable with gas borne substance capturing material, the trap being located inside the housing and arranged so that gas passing through the housing passes through the capturing material in a direction which is at an angle to the longitudinal axis of the housing.

The capturing material may be supported, at least in use, by a material support, e.g. a gas permeable core.

The capturing material may define a trap body which has a projected end surface area in the direction of the longitudinal axis of the housing, which is substantially less than a trap body surface area through which gas in use passes. In one embodiment of the invention, the trap body is cylindrical, e.g. circular cylindrical with a length sufficient to ensure that an external cylindrical surface area of the trap body is substantially greater than an end surface area of the trap body, with the trap body being arranged longitudinally in the housing. In a variation of this embodiment, the trap body has a gas inlet passage so that in use gas flows from and through an interior surface area outwardly to and through an exterior surface area, with the interior surface area being greater than an end surface area of the trap body.

In another embodiment of the invention, the trap body is planar with two major faces facing in opposite directions, towards a longitudinally extending interior surface of the housing, with minor end or side surfaces of the trap body facing towards a gas inlet end and a gas outlet end of the housing.

In yet another embodiment of the invention, the trap body is planar with two major faces facing in opposite directions and being slanted at an angle relative to the longitudinal axis of the housing. Thus, in this embodiment, the major faces are typically also arranged at an angle to the longitudinally extending interior surface of the housing.

The trap may include a gas permeable holder within which the capturing material is located, the holder in turn being located inside the housing. The holder may be longitudinally displaceable inside the housing.

The device according to the fifth aspect of the invention may have a sampling condition in which at least a major portion of the trap is located inside or covered by the housing and an analysis condition in which at least a portion of the trap is exposed or located outside the housing.

The trap may include a handle or gripping formation which allows a manipulator to manipulate the trap without the manipulator physically contacting the capturing material.

The housing typically includes a gas inlet and a gas outlet. The device may include an air impermeable protective package within which the housing and the trap are sealed. Typically, the package has ends in the vicinity of the gas inlet and the gas outlet, which can be opened. In one embodiment of the invention, the package is in the form of a synthetic or polymeric plastics bag or holder with opposed ends which can be cut open with a sharp instrument such as a knife or a pair of scissors.

The housing may include a connector or connector portion to connect to a vacuum source, and a flow guide or flow guide portion, the trap or holder being located inside the flow guide or flow guide portion. The flow guide may be removably attached to the connector. Similarly, the trap or holder may be removably attached to the connector.

The housing of the device according to the fifth aspect of the invention may be in the form of a sleeve and the holder may be slidably received inside the sleeve. The sleeve may be cylindrical, e.g. circular cylindrical. One open end of the sleeve may define the gas inlet and an opposed open end may define the gas outlet.

The holder of the device according to the fifth aspect of the invention may include a cage portion to receive the capturing material. The cage portion may be elongate and at least one end of the cage portion is typically fully closed.

The handle or gripping formation may extend from an end of the cage remote from the end of the sleeve which in use is the gas inlet end.

The device may include a closure member for the gas inlet and a closure member for the gas outlet.

The housing may be a monolithic moulded body. Typically, the housing is moulded from a material which is chemically inert and which does not include a plasticizer. In one embodiment of the invention, the housing is a moulded polypropylene body. Similarly, the holder may be a monolithic moulded body, e.g. a moulded polypropylene body. If desired, the polypropylene may be fluorinated. Preferably, the material of the holder (and the housing) can withstand temperatures in excess of 100 °C to allow the sampling device to be used in a thermal desorber for providing a sample to be analysed by an analyser such as a gas chromatograph/mass spectrometer combination.

As will be appreciated, many materials are suitable for use as a capturing material in the device of the invention. The choice of capturing material may depend on the substance which the sampling device is intended to detect if present. The choice of capturing material may also depend on the nature of analytical processes or devices which will be used with the sampling device, e.g. a gas chromatograph or a dog. The applicant however expects that glass wool, possibly in combination with a silicone oil stationary phase, may be a particularly suitable material. Glass wool has very good mechanical trapping abilities, provides a good substrate for a silicone oil and does not allow absorption of an analyte into the glass material. Another attractive material is a fibre spun non-woven polypropylene material.

In one embodiment of the invention, the capturing material is cotton. The applicant expects that cotton may be very suitable in cases where the analyte is absorbed by moisture, e.g. in the breath of a human being.

If desired, an identifying microchip may be embedded in the capturing material.

The invention will now be described, by way of example only, with reference to the accompanying diagrammatic drawings in which
Figure 1 shows an exploded three-dimensional view of a gas borne substance sampling device in accordance with the invention;
Figure 2 shows a longitudinal section through the gas borne substance sampling device of Figure 1, in an inoperative condition;
Figure 3 shows a longitudinal section through the gas borne substance sampling device of Figure 1, in an analysis condition;
Figure 4 shows a sectioned view of a gas borne substance sampling device connector in accordance with the invention;
Figure 5 shows a longitudinally sectioned view of another embodiment of a gas borne substance sampling device in accordance with the invention, in an inoperative condition;
Figure 6 shows a longitudinally sectioned view of the gas borne substance sampling device of Figure 5, in an analysis condition;
Figure 7 shows a longitudinally sectioned view of a further embodiment of a gas borne substance sampling device in accordance with the invention, in an inoperative condition; and
Figure 8 shows a longitudinally sectioned view of yet another embodiment of a gas borne substance sampling device in accordance with the invention, in an inoperative condition.

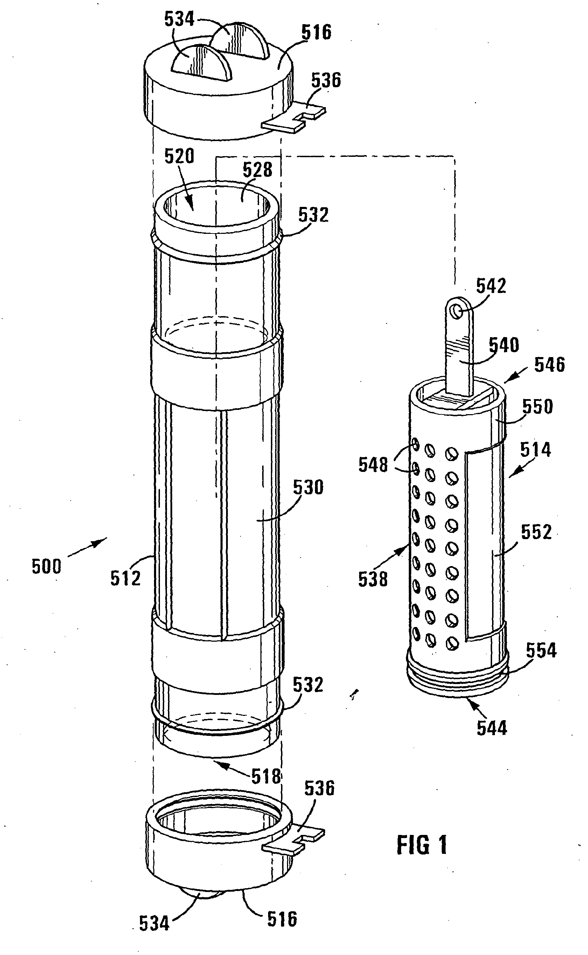

Referring to Figures 1 to 3 of the drawings, reference numeral 500 generally indicates a gas borne substance sampling device in accordance with the invention. The device 500 includes an open-ended housing 512 through which gas can be passed, a holder 514 for gas borne substance capturing material and two closure members or end caps 516.

The housing 512 is in the form of a sleeve which is generally circular cylindrical. An open end of the housing 512 defines a gas inlet 518. An opposed open end of the housing 512 defines a gas outlet 520.

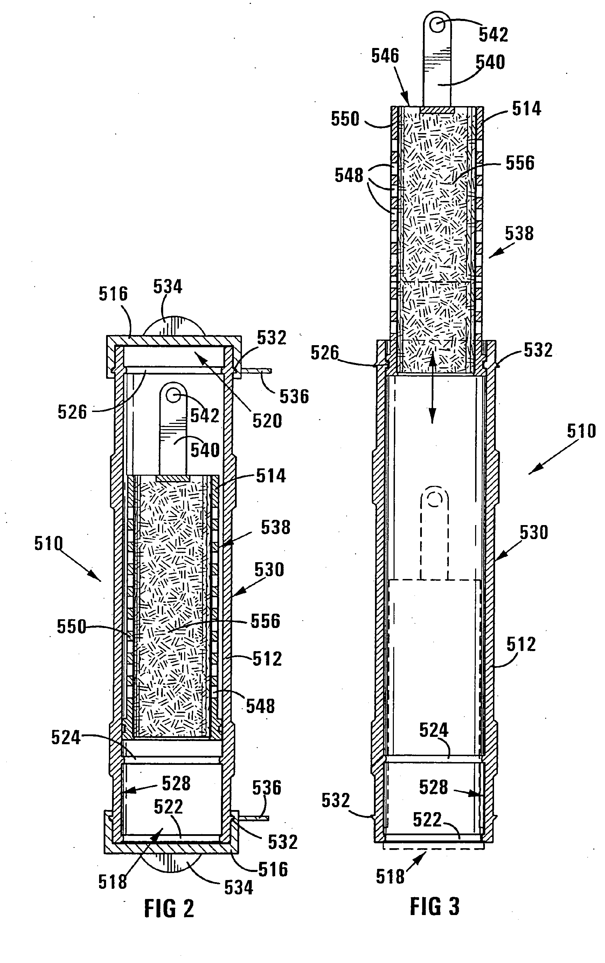

The housing 512 is a monolithic moulded polypropylene body. Three retaining formations, in the form of annular ridges 522, 524 and 526 are moulded on a cylindrical interior surface 528 of the housing 512 (see Figure 2). The purposes of the various annular ridges 522, 524, 526 will be described in more detail hereinafter. On an external surface 530 of the housing 512, two spaced annular ridges 532 are moulded, respectively adjacent the gas inlet 518 and the gas outlet 520. The purpose of the annular ridges 532 is frictionally to engage the end caps 516 securely to mount the end caps 516 over the open ends of the housing 512. The mounting of the end caps 516 on the housing 512 is clearly illustrated in Figure 2 of the drawings.

The end caps 516 are also moulded monolithic polypropylene bodies. Two spaced semi-circular guide members 534 and a combination gripping member/guide member 536 form part of each of the end caps 516. The guide members 534 and the combination guide member/gripping member 536 advantageously can be used to retain a rubber band or other fastening device or seal in position, which is used to assist in keeping the end caps 516 in place over the open ends of the housing 512 and/or to provide an indication of tampering with the device 500.

The holder 514 comprises a cage portion 538 and a handle or gripping formation 540. Again, the holder 514 is a monolithic moulded body of polypropylene. A small aperture 542 is located in a free end of the handle 540.

The cage portion 538 is elongate and is fully open at an end 544 and partially open at an end 546. A plurality of apertures 548 is defined through a generally circular cylindrical wall 550 of the cage portion. The apertures 548 are arranged in two arrays on diagonally opposite sides of the wall 550, as can be seen in Figures 2 and 3 of the drawings. Each array includes twenty-seven apertures 548.

Two recessed surfaces 552, only one of which can be seen in Figure 1 of the drawings, circumferentially separate the aperture arrays. These recessed surfaces 552 can be used adhesively to attach a label, sticker, bar code or the like to the holder 514. A similar label, sticker or bar code or the like can be attached to the surface 530 of the housing 512.

An annular recess or groove 554 is defined adjacent the end 544 of the holder 514. The groove 554 is a complementary retaining formation for the annular ridges 522, 524, 526 and is shaped and dimensioned to co-act with the annular ridges 522, 524, 526 to retain the holder 514 in various positions inside the housing 512.

As shown in Figures 2 and 3 of the drawings, a filter or capturing material 556 is located inside the cage portion 538. Many capturing materials may be suitable to be included with the device 500 of the invention, e.g. glass wool or cotton. However, it is to be appreciated that the device 500 can be supplied with or without a capturing material in the cage portion 538. If the device 500 is supplied without a capturing material, the user of the device 500 can fill the cage portion 538 with a capturing material selected for the particular gas borne substance the presence of which the user wishes to detect by means of the device 500.

The device 500 is typically supplied to a user in the condition shown in Figure 2 of the drawings, with or without a capturing material located in the cage portion 538. If the device 500 includes a capturing material, the device 500 can immediately be used by simply removing the end caps 516 thereby setting the device 500 in a sampling condition, connecting the gas outlet 520 to a suction device, such as a vacuum cleaner, and sucking air through the gas inlet 518. As will be appreciated, the air passes through the gas inlet 518 into the housing 512, and then through the open end 544 of the holder 514, through the capturing material 556, out through the partially open end 546 of the holder 514 and out through the gas outlet 520. The capturing material 556 removes gas borne substances from the air passing through the device 500, whether by means of mechanical filtration, absorption or adsorption. It is also possible, instead of sucking, to blow air through the device 500, e.g. when a breath sample is taken.

In order to determine if a particular substance has been retained by the capturing material 556, the device 500 is arranged into an analysis condition as shown in Figure 3 of the drawings. This is achieved by taking hold of the handle 500 and sliding the holder 514 out of the housing 512 until the groove 554 engages the annular ridge 526, as shown in Figure 3 of the drawings. As can be seen in Figure 3 of the drawings, in the analysis condition, substantially all of the holder 514 is located outside the housing 512. In order to displace the holder 514, a hooked device, e.g. a special tool or a bent piece of wire or the like can be hooked through the aperture 542 in the handle 540, with the holder 514 then being pulled from the housing 512 without the user having physically to touch the cage portion 538 or indeed any part of the holder 514.

In the analysis condition as shown in Figure 3 of the drawings, the device 500 can be suspended from a wire by means of a hook fitting through the aperture 540, or it can be made to stand upright on a support surface. A dog trained to detect particular odours can then be brought to the device 500 and allowed to sniff the exposed portion of the holder 514. Usually, these dogs are trained to produce an identifiable reaction, such as sitting down, when it positively identifies the substance the dog was trained to detect, and is then rewarded for good work.

As will be appreciated, instead of using a dog, other analytical processes or devices may also be used with the sampling device 500. For example, odours or vapours or other substances trapped by the capturing material 556 may be removed, e.g. desorbed, from the capturing material 556 by means of chemical or physical processes, e.g. thermally to provide a sample, with the sample then being analysed by any suitable means, e.g. a gas chromatograph/mass spectrometer combination.

For the detection of some substances, it is usual to employ a so-called "dust brushing" technique in which a capturing material is used as a brush whilst at the same time sucking air through the capturing material. In order to achieve this, the holder 514 is simply pushed down by means of the handle 540, past the annular ridge 524, until the annular groove 554 engages the annular ridge 522. In this position, which is a brushing position as shown by the broken lines in Figure 3 of the drawings, the open end 544 of the cage portion 538 is located immediately inside and coplanar with the gas inlet 518. With a suitable capturing material 556 which protrudes from the open end 544 of the cage portion 538, and thus from the gas inlet 518, the device 500 can thus be used in a dust brushing application.

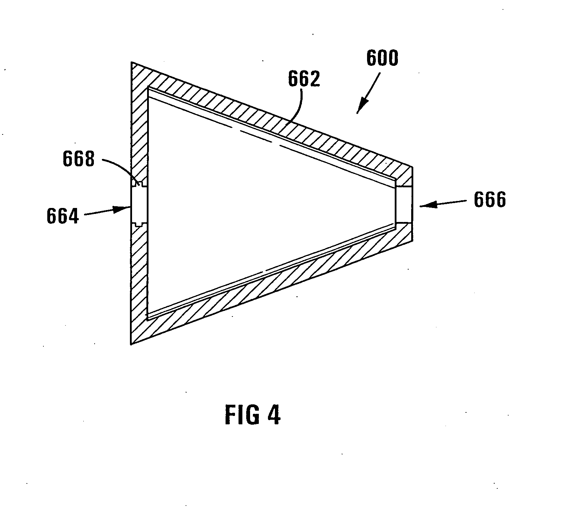

With reference to Figure 4 of the drawings, a gas borne substance sampling device connector is generally indicated by reference numeral 600. The connector 600 includes a moulded monolithic polypropylene body 662. The body 662 is frusto-conical in shape and defines a gas inlet 664 and a gas outlet 666. The gas outlet 666 is located in an end of the body 662 where the body 662 has a minimum diameter. The inlet 664 is located in a wall of the body 662 opposite the outlet 666. The wall of the body 662 in which the inlet 664 is located, defines an annular groove 668 for engaging one of the annular ridges 532 of the device 500.

In use, the gas outlet 520 of the device 500 is inserted through the gas inlet 664 of the connector 600, with the annular ridge 526 engaging the groove 658 defined by the body 662. The end of the body 662 in which the gas outlet 666 is located, can then be inserted into any suction device or conduit with a circular suction aperture, with a diameter between a maximum and a minimum as defined by the dimensions of the body 662.

It is an advantage of the device 500 of the invention, as illustrated, that it is easily usable for many possible gas borne substance sampling applications. The device 500 provides an improved desorption capability for enhanced dog screening capacity, a reduced flow loss through the capturing material, and reduced contamination, both during sampling and analysis, compared to the prior art sampling device of which the Applicant is aware.

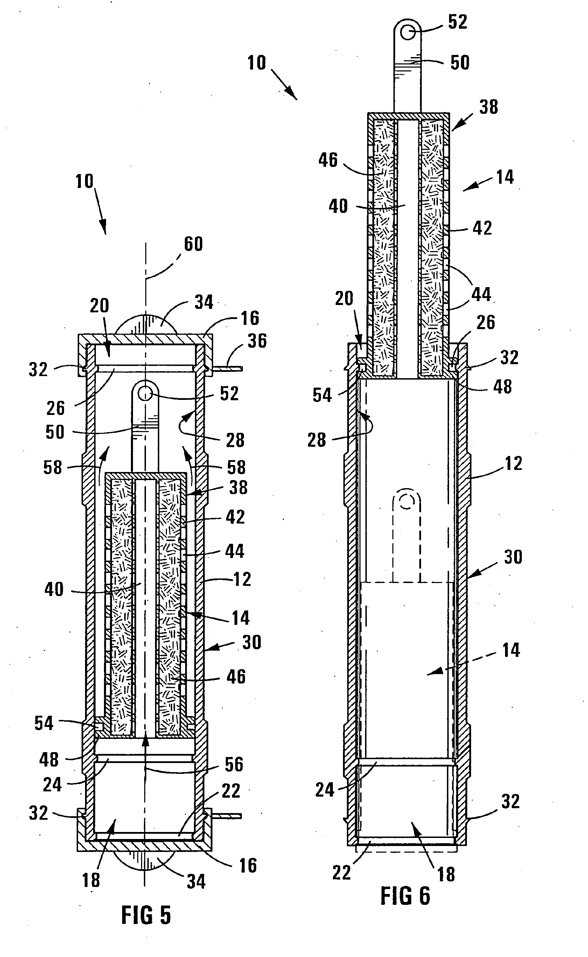

Referring to Figures 5 and 6 of the drawings, reference numeral 10 generally indicates another embodiment of a portable gas borne substance sampling device in accordance with the invention. The device 10 is similar to the device 500 and includes an open-ended elongate housing 12 through which gas can be passed, and a trap 14 which is slidingly located inside the housing 12. Two closure members or end caps 16 are provided over the open ends of the housing 12.

The housing 12 is in the form of a sleeve which is generally circular cylindrical. An open end of the housing 12 defines a gas inlet 18. An opposed open end of the housing 12 defines a gas outlet 20.

The housing 12 is a monolithic moulded polypropylene body. Three retaining formations, in the form of annular ridges 22, 24 and 26 are moulded on a circular cylindrical interior surface 28 of the housing 12. On an external surface 30 of the housing 12, two spaced annular ridges 32 are moulded, respectively adjacent the gas inlet 18 and the gas outlet 20. The purpose of the annular ridges 32 is frictionally to engage the end caps 16 securely to mount the end caps 16 over the open ends of the housing 12. The mounting of the end caps 16 on the housing 12 is clearly illustrated in Figure 5 of the drawings.

The end caps 16 are also moulded monolithic polypropylene bodies. Two spaced semi-circular guide members 34 (only one of which can be seen in Figure 5) and a combination gripping member/guide member 36 form part of each of the end caps 16. The guide members 34 and the combination gripping members/guide members 36 advantageously can be used to retain a rubber band or other fastening device or seal in position, which may be used to assist in keeping the end caps 16 in place over the open ends of the housing 12 and/or to provide an indication of tampering with the device 10.

The trap 14 includes a gas permeable holder 38. The holder 38 includes an elongate circular cylindrical wall 42 which defines a plurality of apertures 44, thus providing the holder 38 with its gas permeable characteristic. The holder 38 further includes a gas permeable core 40, in the form of a perforated tube, and capturing material defining a trap body 46 which is annular in end view, being located between the core 40 and the wall 42.

An end of the tube of the core 40 closest to the gas inlet 18 is open, whereas an opposite end of the tube closest to the gas outlet 20 is closed, as clearly shown in Figures 5 and 6 of the drawings. An annular sealing formation 48 is located at an end of the wall 42, closest to the gas inlet 18. In the embodiment shown in Figures 5 and 6, the formation 48 also covers an end of the trap body 46 closest to the gas inlet 18, thus ensuring that, in use, air enters the core 40 before passing through the trap body 46.

The trap 14 also includes a handle or gripping formation 50. A small aperture 52 is located in a free end of the handle 50.

An annular recess or groove 54 is defined by the sealing formation 48. The groove 54 is a complementary retaining formation for the annular ridges 22, 24, 26 and is shaped and dimensioned to co-act with the annular ridges 22, 24, 26 to retain the trap 14 in various positions inside the housing 12.

The capturing material making up the trap body 46 may be any capturing material suitable to be included with the device 10 of the invention, e.g. glass wool or cotton. However, it is to be appreciated that the device of the invention can be supplied with or without capturing material inside the trap 14. If the device is supplied without capturing material, the user of the device can load the trap 14 with a capturing material selected for the particular gas borne substance, the presence of which the user wishes to detect by means of the device. Naturally, this option will only exist if the trap 14 is constructed such that it is possible to load it with capturing material after manufacture and assembly.

The device 10 is typically supplied to a user in the condition shown in Figure 5 of the drawings. As the device 10 includes a capturing material, the device 10 can immediately be used by simply removing the end caps 16 thereby setting the device 10 in a sampling condition, connecting the gas outlet 20 to a suction device or other source of vacuum, such as a vacuum cleaner, and sucking air through the gas inlet 18. The air passes through the gas inlet 18 into the core 40, as shown by arrow 56, and then through the perforated tube of the core 40, through the trap body 46 and out through the apertures 44 in the wall 42, before escaping from an annular zone between the wall 42 and the housing 12, as shown by arrows 58, before leaving through the gas outlet 20. The trap body 46 removes gas borne substances from the air passing through the device 10, whether by means of mechanical filtration, absorption or adsorption. It is also possible, instead of sucking, to blow air through the device 10, e.g. when a breath sample is taken. After use, the end caps 16 are replaced to retain captured scents or odours inside the housing 12 and to inhibit contamination.

In order to determine if a particular substance has been retained by the trap body 46, the device 10 is arranged into an analysis condition as shown in Figure 6 of the drawings. This is achieved by taking hold of the handle 50 and sliding the trap 14 out of the housing 12 until the groove 54 engages the annular ridge 26, as shown in Figure 6 of the drawings. As can be seen in Figure 2 of the drawings, in the analysis condition, substantially all of the trap 14 is located outside the housing 12. In order to displace the trap 14, a hook device, e.g. a special tool or a bent piece of wire or the like can be hooked through the aperture 52 in the handle 50, with the trap 14 then being pulled from the housing 12 without the user having physically to touch the trap 14.

In the analysis condition as shown in Figure 6 of the drawings, the device 10 can be suspended from a wire by means of a hook fitting through the aperture 52, or it can be made to stand upright on a support surface. A dog trained to detect particular odours can then be brought to the device 10 and allowed to sniff the exposed portion of the trap 14. As mentioned hereinbefore, these dogs are trained to produce an identifiable reaction, such as sitting down, when it positively identifies the substance the dog was trained to detect, and is then rewarded for good work.

As will be appreciated, instead of using a dog, other analytical processes or devices may also be used with the sampling device 10. For example, odours or vapours or other substances trapped by the capturing material 56 may be removed, e.g. desorbed, from the capturing material 56 by means of chemical or physical processes, e.g. thermally to provide a sample, with the sample then being analysed by any suitable means, e.g. a gas chromatograph/mass spectrometer combination. It is also possible to pass air or another gas through the housing 12 in a direction opposite to which air was originally sucked through the housing 12, thereby to displace at least some of the captured odour from the trap 14 to the air or gas, and then to expose the nose of a dog to the air or gas for detection of the odour.

As already stated, for the detection of some substances, it is usual to employ a so-called "dust brushing" technique in which a capturing material is used as a brush whilst at the same time sucking air through the capturing material. In order to achieve this, the trap 14 is simply pushed down by means of the handle 50, past the annular ridge 24, until the annular groove 54 engages the annular ridge 22. In this position, which is a brushing position and which is shown in broken lines in Figure 6 of the drawings, one end of the trap 14 is located immediately inside and coplanar with the gas inlet 18. If this end of the trap 14 is open and if a suitable capturing material is used which protrudes from the open end of the trap 14, and thus from the gas inlet 18, the device 10 can thus be used in a dust brushing application.

It is a characteristic of the device 10 of Figures 5 and 6, that the trap 14 is arranged such that gas in use passing through the housing 12 passes through the trap body 46 in a direction which is at an angle to a longitudinal axis 60 of the housing 12. It is also a characteristic of the device 10 that the trap body 46 has a projected end surface area in the direction of the longitudinal axis of the housing, which is substantially less than a trap body surface area through which gas in use passes into the trap body 46. In the embodiment shown in Figures 5 and 6 of the drawings, this trap body surface area is the circular cylindrical area of contact between the core 40 and the trap body 46. The trap body 46 thus provides a short filtration or separation path but a high filtration or trapping area; in a compact arrangement.

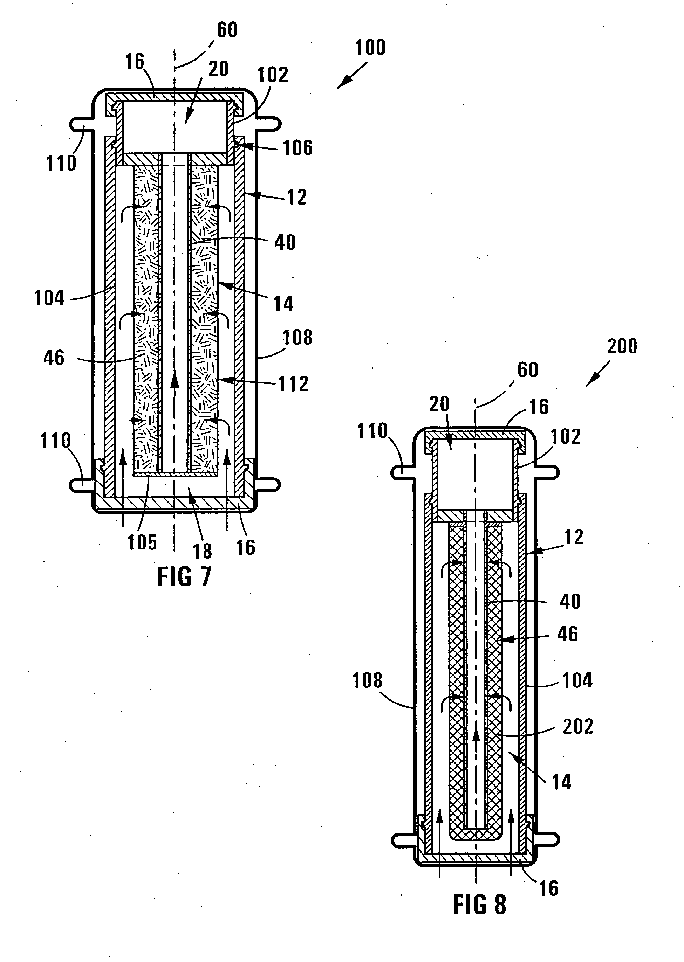

Referring to Figure 7 of the drawings, another embodiment of a gas borne substance sampling device in accordance with the invention is generally indicated by reference numeral 100. The device 100 embodies some of the same inventive concepts as the device 10 and unless otherwise indicated, the same reference numerals are thus used to indicate the same or similar parts or features.

Unlike the device 10, the body 12 of the device 100 comprises two separable portions. A connector portion 102 is provided to connect to a vacuum source, and a flow guide portion 104 is provided within which the trap 14 is located. The flow guide portion 104 is removably attached to the connector portion 102 by means of an annular ridge/groove arrangement generally indicated by reference numeral 106. The trap body 46 is supported by the gas permeable core 40. However, an end of the core 40 closest to the gas inlet 18 is closed by a disc-shaped end wall 105, whereas an opposite end of the core 40 closest to the gas outlet 20 is open. This is in contrast with the arrangement of the device 10, which is reversed. The core 40 is removably attached to the connector portion 102.

The device 100 includes an air impermeable protective package 108 within which the housing 12 and the trap 14 are sealed. In the embodiment shown in Figure 3 of the drawings, the package 108 is in the form of a synthetic or polymeric plastics holder with annular formations 110 adjacent opposite ends of the package. In use, these annular formations 110 can be cut open by means of a pair of scissors or a knife, thus providing easy access to the closure members 16, which can then be removed in order to make use of the device 100.

In use, gas passing through the housing 12 is thus passed through an external cylindrical surface area 112 of the trap body 46 into the hollow core 40 and from the hollow core 40 into the connector portion 102, before leaving the device 100 through the gas outlet 20. Prior to and during use of the device 100, the trap body 46 is protected against contamination by the package 108 and the flow guide portion 104. When it is desired to expose the trap body 46 to a dog, the portion of the package 108 still remaining can be slipped off the housing 12 and the flow guide portion 104 can be removed from the connector portion 102, thus exposing the trap body 46. In this condition, the device 100 can be considered to be in an analysis condition.

As will be appreciated, as the capturing material of the trap body 46 is only supported by the gas permeable core 40, it is unlikely that the device 100 would lend itself to the use of different kinds of capturing material although it is in principle possible to use different kinds of capturing material, e.g. by winding the capturing material over the core 40. It is thus envisaged that the device 100 will usually be supplied with the capturing material already in place. If it is desired to have the option of using different kinds of capturing material, yet another embodiment of a gas borne substance sampling device in accordance with the invention, and as shown in Figure 8 of the drawings, can be used. In Figure 8 of the drawings, this embodiment is generally indicated by reference numeral 200. As the embodiment shown in Figure 8 is quite similar to the embodiment shown in Figure 7, the same reference numerals are again used to indicate the same or similar parts or features.

In the device 200, the trap body 46 is in the form of a filter bag 202 stretched over the gas permeable core 40. The filter bag 202 is removably fastened to the connector portion 102 or the core 40, e.g. by means of a clamp (not shown), which means that filter bags of various kinds of material can easily be used, as desired. Typically, the filter bag will be a woven bag, although it is in principle also possible to use non-woven material for the construction of the filter bag.

It is an advantage of the gas borne substance sampling device of the invention, as illustrated in Figures 5 to 8 of the drawings, that gas passing through the housing passes through the capturing material in a direction which is at an angle to the longitudinal axis of the housing. This ensures efficient capturing of odours and high flow rates for a particular pressure differential across the device. In all of the embodiments illustrated, the surface area of the trap body through which the gas enters the trap body is substantially larger than a projected end surface area of the trap body. The compact gas borne substance sampling devices, as illustrated, are all easily useable for many possible gas borne substance sampling applications. The devices facilitate screening by dogs and are designed to inhibit contamination, both during sampling and analysis.

## Claims

1. A gas borne substance sampling device which includes
a housing through which gas can be passed; and
a holder for gas bome substance capturing material, the holder being located or locatable inside the housing to contact the capturing material with gas passing through the housing, the device having a sampling condition in which at least a major portion of the holder is protected inside or covered by the housing and an analysis condition in which at least a portion of the holder is exposed or outside the housing.

2. The sampling device as claimed in claim 1, in which the housing and the holder are relatively displaceable to expose the holder when the device is in its analysis condition.

3. The device as claimed in claim 1 or claim 2, in which the housing is in the form of a sleeve and the holder is slidably received inside the sleeve.

4. The device as claimed in claim 3, in which the sleeve is cylindrical, one open end of the sleeve defining a gas inlet and an opposed open end defining a gas outlet.

5. The device as claimed in any one of the preceding claims, in which the holder includes a cage portion to receive the capturing material.

6. The device as claimed in claim 5, in which the cage portion is elongate, at least one end of the cage portion being fully or partially open, and walls of the cage portion being gas permeable.

7. The device as claimed in any one of the preceding claims, in which the holder includes a handle or gripping formation.

8. The device as claimed in any one of the preceding claims, which includes a retaining arrangement to retain the holder in the housing in a position corresponding to the analysis condition of the device.

9. The device as claimed in any one of the preceding claims, which includes a retaining arrangement to retain the holder in the housing in a position corresponding to the sampling condition of the device.

10. The device as claimed in any one of the preceding claims, which includes a retaining arrangement to retain the holder in a brushing position in which capturing material protrudes from the housing and the holder to define a brush formation.

11. The device as claimed in any one of the preceding claims, in which the housing is a monolithic body moulded from a material which is chemically inert and which does not include a plasticizer.

12. The device as claimed in any one of the preceding claims, in which the housing is elongate with a longitudinal axis and in which the holder forms part of a trap which comprises the gas borne substance capturing material, the trap thus being located or locatable inside the housing and arranged so that gas passing through the housing passes through the capturing material in a direction which is at an angle to the longitudinal axis of the housing.

13. The device as claimed in claim 12, in which the capturing material is supported, at least in use, by a material support.

14. The device as claimed in claim 12 or claim 13, in which the capturing material defines a trap body which has a projected end surface area in the direction of the longitudinal axis of the housing, which is substantially less than a trap body surface area through which gas in use passes.

15. The device as claimed in any one of the preceding claims, which includes an air impermeable protective package within which the housing and the holder are sealed, the housing having a gas inlet and a gas outlet and the package having ends in the vicinity of the gas inlet and the gas outlet, which can be opened.

16. The device as claimed in any one of the preceding claims, in which the housing includes a connector or connector portion to connect to a vacuum source, and a flow guide or flow guide portion, the holder being located inside the flow guide or flow guide portion.

17. The device as claimed in claim 16, in which the flow guide is removably attached to the connector.

18. The device as claimed in claim 16 or claim 17, in which the holder is removably attached to the connector.

19. The device as claimed in any one of claims 12 to 14 inclusive, in which the holder includes a cage portion to receive the capturing material, the cage portion being elongate and at least one end of the cage portion being fully closed.

20. A gas borne substance sampling device connector, which includes a body defining a gas inlet and a gas outlet, the gas inlet being shaped and dimensioned to be connected in fluid flow manner to a gas borne substance sampling device, and the gas outlet being located in a tapering portion of the body.

21. The gas borne substance sampling device connector as claimed in claim 20, in which the gas inlet is shaped and dimensioned to be connected in fluid flow manner to the housing of a gas borne substance sampling device as claimed in any one of claims 1 to 19 inclusive.
